Europäisches Patentamt

European Patent Office

Office européen des brevets

(19)

(11) **EP 1 437 650 A2**

(12) **EUROPEAN PATENT APPLICATION**

(43) Date of publication:
**14.07.2004 Bulletin 2004/29**

(51) Int Cl.⁷: **G06F 9/44**

(21) Application number: **03256310.8**

(22) Date of filing: **07.10.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **12.11.2002 US 292851**

(71) Applicant: **Sun Microsystems, Inc.
Santa Clara, California 95054 (US)**

(72) Inventor: **Kawahara, Hideya
Mountain View, CA 94040 (US)**

(74) Representative: **Davies, Simon Robert
D Young & Co,
21 New Fetter Lane
London, EC4A 1DA (GB)**

(54) **Method and apparatus for updating a user interface for a computer system**

(57)    A method and system are provided for updating a User Interface (UI) for a computer system. During operation, the system receives a request from a user or an application to modify a spatial attribute of a widget in the UI, such as the size or the location of the widget, wherein the term "widget" generally refers to any UI component, including windows, frames, buttons, list boxes, etc. In response to this request, the system modifies the spatial attribute of the widget. In modifying the spatial attribute of the widget, the system ensures that the modifications adhere to a physics model.

FIG. 4

EP 1 437 650 A2

## Description

### Field of the Invention

The present invention relates to User Interfaces (UIs) for computer systems, and more specifically to a method and an apparatus for updating a UI for a computer system.

### Background of the Invention

Devices that use a display for user interaction, such as personal computers and information kiosks, typically provide a User Interface (UI) framework that includes a windowing system. These windowing systems contain UI components referred to as "widgets" through which users can interact with applications running on the device. The term "widget" generally refers to any UI component, including windows, frames, buttons, list boxes, etc. User interfaces for applications are developed by combining these widgets.

Users and applications are typically allowed to change the spatial attributes of a widget, such as the size of the widget or the widget's location. For example, a user can specify such a change through a pointing device, such as a mouse. Similarly, an application can specify such a change by making function calls to the windowing system. In most cases, these changes take place instantaneously, although in some newer UIs, animation sequences accompany these changes.

Humans typically respond more favorably to environments that mimic reality. While instantaneous changes to the spatial attributes of widgets do not pose any problems, they prevent the user from feeling the virtual world presented by the windowing system in a natural manner. The closer a windowing system comes to presenting a virtual world that mimics reality, the more comfortable users typically feel when interacting with the windowing system. Many video games use this concept to present a more complete gaming experience; however, video gaming environments cannot serve as a UI framework for computer applications.

### Summary of the Invention

Accordingly, one embodiment of the present invention provides a system for updating a User Interface (UI) for a computer system. During operation, the system receives a request from a user or an application to modify a spatial attribute of a widget in the UI, such as the size or the location of the widget. In response to this request, the system modifies the spatial attribute of the widget. In modifying the spatial attribute of the widget, the system ensures that the modifications adhere to a physics model.

Such an approach therefore involves updating a UI for a computer system in a manner that more closely mimics reality, by basing the update on the physics model.

In one embodiment, the system modifies the widget by modifying the location of one or more anchor points in the UI that the widget is coupled to. The widget may be connected to an anchor point in the UI via an idealized spring defined within the physics model, where the physics model defines a spring constant and a natural length for the spring.

In one embodiment, upon modifying the location of the anchor point, the system uses the physics model to calculate the sum of all of the forces acting on the widget with the new anchor point. Once a net force has been determined, the system moves the widget in the direction of the net force. The system continues to calculate the net force as the location of the widget changes in response to the net force.

The physics model may define a gravitational force, wherein the gravitational force pulls objects in the UI towards the bottom of the UI. The physics model may also define a wind force, wherein the wind force pushes objects in the UI in accordance with a model for the wind force. The physics model may also define a frictional force, wherein the frictional force counteracts the movement of objects in the UI.

In one embodiment, each object in the UI has a mass. The mass may be used in determining the magnitude of the effects of the different forces on the object.

### Brief Description Of The Drawings

Various embodiments of the invention will now be described in detail by way of example only with reference to the following drawings:

FIG. 1 illustrates a windowing system for a computer system in accordance with one embodiment of the present invention.
FIG. 2 illustrates a windowing system containing a physics model in accordance with one embodiment of the present invention.
FIG. 3 illustrates a window object in accordance with one embodiment of the present invention.
FIG. 4 presents a flowchart illustrating the process of altering physical attributes of a window in accordance with one embodiment of the present invention.

### Detailed Description

The data structures and code described in this detailed description are typically stored on a computer readable storage medium, which may be any device or medium that can store code and/or data for use by a computer system. This includes, but is not limited to, magnetic and optical storage devices such as disk drives, magnetic tape, CDs (compact discs) and DVDs (digital versatile discs or digital video discs), and computer instruction signals embodied in a transmission medium (with or without a carrier wave upon which the signals are modulated). For example, the transmission medium may include a communications network, such as the Internet.

## Windowing System

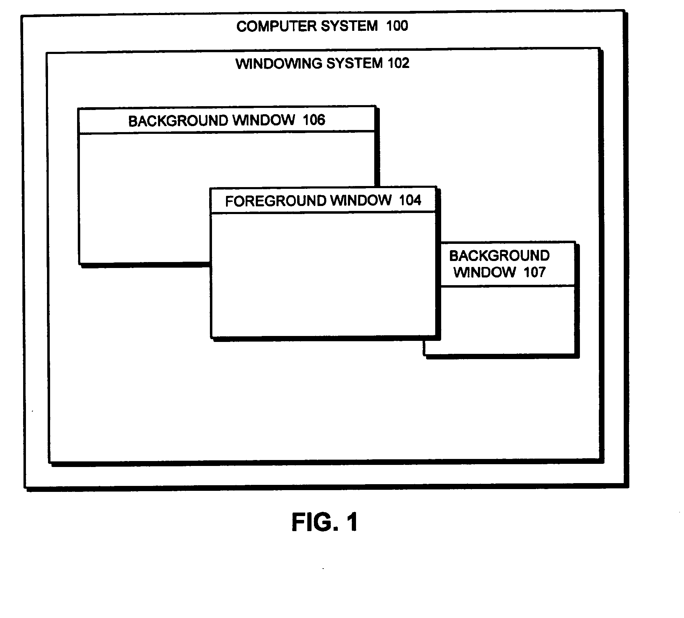

FIG. 1 illustrates windowing system 102 for computer system 100 in accordance with one embodiment of the present invention. Computer system 100, which contains windowing system 102, can generally include any type of computer system, including, but not limited to, a computer system based on a microprocessor, a mainframe computer, a digital signal processor, a portable computing device, a personal organizer, a device controller, and a computational engine within an appliance.

In general, windowing system 102 can include any Graphical User Interface (GUI) running on computer system 100. In the example illustrated in FIG. 1, windowing system 102 contains objects such as foreground window 108 and background windows 106 and 107. Note that windowing system 102 can generally contain any number of objects, and the number of objects that windowing system 102 contains can vary over time.

## Windowing System Employing a Physics Model

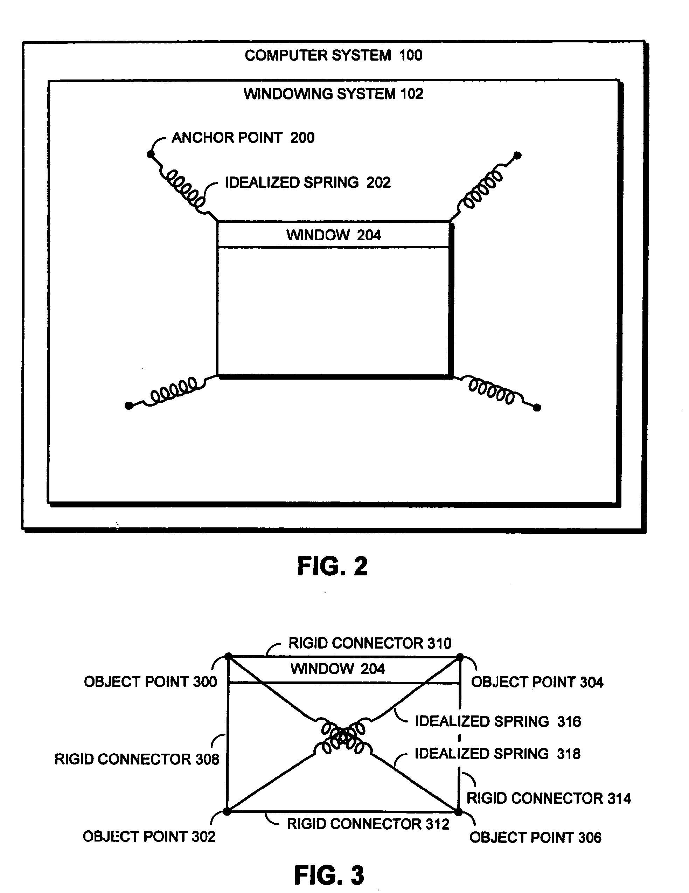

FIG. 2 illustrates windowing system 102 that operates in accordance with a physics model in accordance with one embodiment of the present invention. Windowing system 102 has the following characteristics:

- Properties of objects that windowing system 102 controls are defined by a physics model, which specifies the behavior of the objects. Attributes such as an object's size can play an important role in determining behavior of the object. For example, size can be used to determine the mass of an object, which can be used in calculating the motion of the object.
- The physics model describes relationships among groups of objects. For example, in one embodiment of the present invention, the physics model defines a repulsive force between unrelated objects and idealized springs between related objects belonging to a similar group. These exemplary relationships act to keep the objects that are related closer together, and to keep unrelated objects apart.
- The physics model can define the potential energy of an object based on the location of an object. Depending on the type of application running, it could be desirable to have objects located towards the top of the screen to have a higher potential energy state than objects that are located towards the bottom of the screen.
- The physics model can define how a user interacts with the objects. For example, mouse motion can be interpreted as a force being applied to the object, wherein the direction of the force is equivalent to the direction of the mouse movement and magnitude of the force is proportional to the speed with which the mouse is moved.

- Calculation for the physics model can be an iterative process. Every movement of an object in windowing system 102 changes the environment and the forces on the other objects. Windowing system 102 must constantly re-calculate the forces on all of the objects as the objects move and perform the appropriate actions.
- The physics model can include forces in three dimensions, but must be able to represent the virtual world in two dimensions for two-dimensional display devices.
- The physics model can include "wind" and "gravity." These forces can help to identify specific objects. For instance, an object that has focus, such as foreground window 104, can remain in a fixed location while unrelated windows that do not have focus, such as background windows 106 and 107, can move slowly in the background like leaves blowing in a gently breeze or floating on the surface of an almost still pond. Applying the physics model in this manner can help to achieve a natural motion.
- The physics model can include a frictional force that counteracts the movement of objects.

In the example shown in FIG. 2, window 204 is held in place in windowing system 102 by a set of idealized springs, such as idealized spring 202. Note that these idealized springs are not actually visible to the user of windowing system 102. They are merely used to model the motion of window 204 within windowing system 102. One end of idealized spring 202 is attached to window 204, while the other end is attached to anchor point 200. Anchor point 200 represents a fixed point in windowing system 102. In this manner, window 204 can exhibit limited movement based on forces being applied by the physics model, but cannot move very far from the anchor points because of counteracting forces generated by the idealized springs. Note that the physics model must also define a spring constant and a natural length for idealized spring 202.

## Window Object

FIG. 3 illustrates a window object in accordance with one embodiment of the present invention. Objects within windowing system 102 can also include a collection of smaller objects. For instance, window 204 can be modeled as a collection of object points, such as object points 300, 302, 304, and 306; rigid connectors, such as rigid connectors 308, 310, 312, and 314; and idealized springs, such as idealized springs 316 and 318. In this example, object points 300, 302, 304, and 306 all have a mass associated with them, as well as a location and a velocity, and forces act on object points 300, 302, 304, and 306 independently of each other. The object points are held together by rigid connectors. For example, object point 300 is bound to object point 302 by rigid connector 308. Idealized springs 316 and 318 are connected diagonally across window 204 to keep window 204 in a rectangular shape.

## Process of Altering Physical Attributes of a Window

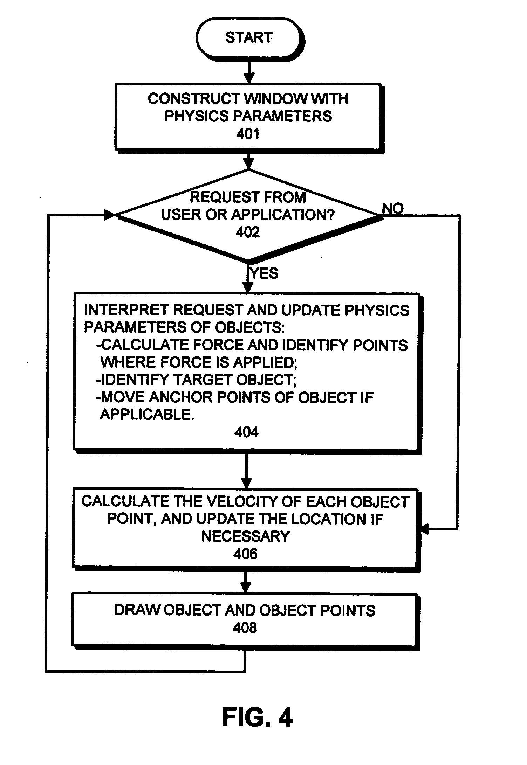

FIG. 4 presents a flowchart illustrating the process of altering the physical attributes of a window in accordance with a physics simulation. This physics simulation is an iterative process that runs the entire time that windowing system 102 is operating. Every time an object is modified or moved in windowing system 102, it affects the forces acting on other objects. Therefore, windowing system 102 constantly applies the physics model to this ever-changing environment.

The system starts by constructing a window, such as window 204, with specific physics parameters (step 401). These physics parameters can include: the length of the rigid connectors; the number, length, and mass of the object points, as well as their location and velocity; the location and number of anchor points; and the number, spring constants, and natural lengths of idealized springs. The system also creates a data structure within windowing system 102 that represents window 204. The current values of all of the physics parameters are stored within this data structure.

Next, windowing system 102 determines if there is a request from either an application or a user (step 402). An application can generate a request by making a function call to windowing system 102, whereas a user can generate a request by providing input through a number of mechanisms, the most common of which is a mouse or other pointing device. If, there is no request, the system proceeds to step 406.

Otherwise, if there is request, the system interprets the request and updates the physics parameters accordingly (step 404). This can be accomplished, for example, by calculating a force specified by the request and identifying the object points on which the force is applied. Note that the actions specified by the request may not be limited to one object, but may affect a collection of objects. Hence, the system first identifies the target object or objects. If necessary, the system modifies the location of the anchor points of these target objects.

Once a force associated with the request has been determined, the system calculates the velocity of each object point and updates its location as necessary (step 406). Calculating the sum of all of the forces on an object point allows the system to determine changes in the object point's velocity. These forces can include forces arising from wind, gravity, friction, attraction between objects, repulsion between objects, collisions between objects, springs, or user-supplied forces to name a few.

Once the sum of all of the forces has been calculated for the object point, if the sum is greater than zero, the object point is accelerated in the direction of the sum of all the forces. This can be represented as follows:

$$v1 = v0 + (\Gamma(f)/m) * d$$

$$l1 = l0 + v1 * d$$

where, v1 is the new velocity, v0 is the old velocity, $\Gamma(f)$ is the sum of all the forces that act on the target point, d is a time factor constant, 11 is the new location, and 10 is the old location. Finally, the system draws the object and the object points in their current location (step 408).

This process for applying the physics model is constantly repeated for all of the objects within windowing system 102 while windowing system 102 is active.

The foregoing descriptions of embodiments of the present invention have been presented for purposes of illustration in order to enable a person skilled in the art to appreciate and implement the invention. They are provided in the context of particular applications and their requirements, but are not intended to be exhaustive or to limit the present invention to the forms disclosed. Accordingly, many modifications and variations will be apparent to practitioners skilled in the art, and the scope of the present invention is defined by the appended claims.

## Claims

1.   A method for updating a User Interface (UI) for a computer system, comprising:

   receiving a request to modify a spatial attribute of a widget in the UI,

   wherein the spatial attribute can include the size or the location of the widget; and
   modifying the widget in accordance with the request;
   wherein modifying the widget involves ensuring that modifications to the spatial attribute of the widget adhere to a physics model.

2.   The method of claim 1, wherein modifying the widget involves modifying the location of an anchor point in the UI that the widget is coupled to.

3.   The method of claim 2, wherein modifying the location of the anchor point further comprises:

   using the physics model to calculate a sum of all of the forces acting on the widget with the new anchor point; and
moving the widget toward a location where the sum of all of the forces acting on the widget is equal to zero.

4. The method of any preceding claim, wherein the widget is coupled to an anchor point in the UI via an idealized spring defined within the physics model.

5. The method of claim 4, wherein the physics model defines a spring constant and a natural length for the spring.

6. The method of any preceding claim, wherein the physics model defines a gravitational force, wherein the gravitational force pulls objects in the UI towards the bottom of the UI.

7. The method of any preceding claim, wherein the physics model defines a wind force, wherein the wind force pushes objects in the UI in accordance with a model for the wind force.

8. The method of any preceding claim, wherein the physics model defines a frictional force, wherein the frictional force counteracts the movement of objects in the UI.

9. The method of preceding claim, wherein each object in the UI has a mass value, wherein the mass value is used in determining a magnitude of the effects of the different forces on the object.

10. An apparatus for updating a User Interface (UI) for a computer system, comprising:

a receiving mechanism configured to receive a request to modify a spatial attribute of a widget in the UI, wherein the spatial attribute can include the size or the location of the widget; and
a modification mechanism configured to modify the widget in accordance with the request;

wherein modifying the widget involves ensuring that modifications to the spatial attribute of the widget adhere to a physics model.

11. The apparatus of claim 10, wherein the modification mechanism is further configured to modify the location of an anchor point in the UI that the widget is coupled to.

12. The apparatus of claim 11, further comprising:

a calculation mechanism configured to use the physics model to calculate a sum of all of the forces acting on the widget with the new anchor point; and

a relocation mechanism configured to move the widget toward a location where the sum of all of the forces acting on the widget is equal to zero.

13. The apparatus of any of claims 10 to 12, wherein the widget is coupled to an anchor point in the UI via an idealized spring defined within the physics model.

14. The apparatus of claim 13, wherein the physics model defines a spring constant and a natural length for the spring.

15. The apparatus of any of claims 10 to 14, wherein the physics model defines a gravitational force, wherein the gravitational force pulls objects in the UI towards the bottom of the UI.

16. The apparatus of any of claims 10 to 15, wherein the physics model defines a wind force, wherein the wind force pushes objects in the UI in accordance with a model for the wind force.

17. The apparatus of any of claims 10 to 16, wherein the physics model defines a frictional force, wherein the frictional force counteracts the movement of objects in the UI.

18. The apparatus of any of claims 10 to 17, wherein each object in the UI has a mass value, wherein the mass value is used in determining a magnitude of the effects of the different forces on the object.

19. A computer-readable storage medium storing instructions that when executed by a computer cause the computer to perform a method for updating a User Interface (UI) for a computer system, the method comprising:

receiving a request to modify a spatial attribute of a widget in the UI,

wherein the spatial attribute can include the size or the location of the widget; and modifying the widget in accordance with the request;
wherein modifying the widget involves ensuring that modifications to the spatial attribute of the widget adhere to a physics model.

20. A computer program comprising instructions that when executed by a computer cause the computer to perform the method of any of claims 1 to 9.

21. An operating system including the computer program of claim 20.

COMPUTER SYSTEM 100

WINDOWING SYSTEM 102

BACKGROUND WINDOW 106

FOREGROUND WINDOW 104

BACKGROUND WINDOW 107

**FIG. 1**

COMPUTER SYSTEM 100

WINDOWING SYSTEM 102

ANCHOR POINT 200

IDEALIZED SPRING 202

WINDOW 204

**FIG. 2**

RIGID CONNECTOR 310

WINDOW 204

OBJECT POINT 300

OBJECT POINT 304

IDEALIZED SPRING 316

RIGID CONNECTOR 308

IDEALIZED SPRING 318

RIGID CONNECTOR 314

OBJECT POINT 302

RIGID CONNECTOR 312

OBJECT POINT 306

**FIG. 3**

START

CONSTRUCT WINDOW WITH
PHYSICS PARAMETERS
401

REQUEST FROM
USER OR APPLICATION?
402 → NO

YES

INTERPRET REQUEST AND UPDATE PHYSICS
PARAMETERS OF OBJECTS:
  -CALCULATE FORCE AND IDENTIFY POINTS
   WHERE FORCE IS APPLIED;
  -IDENTIFY TARGET OBJECT;
  -MOVE ANCHOR POINTS OF OBJECT IF
   APPLICABLE.
404

CALCULATE THE VELOCITY OF EACH OBJECT
POINT, AND UPDATE THE LOCATION IF
NECESSARY
406

DRAW OBJECT AND OBJECT POINTS
408

# FIG. 4